# DEMANDE DE BREVET EUROPEEN

(11) **EP 3 385 616 A1**
(43) Date de publication de la demande: **10.10.2018**
(21) Numéro de dépôt: 18165307.2
(22) Date de dépôt: 30.03.2018
(51) Int. Cl.: F21V 23/04, B61L 5/18, F21V 8/00, F21W 111/00

(54) **DISPOSITIF ET APPAREIL DE SIGNALISATION ET PROCEDE DE DIAGNOSTIC ET/OU D'ASSERVISSEMENT**

(30) Priorité: 05.04.2017 FR 1752957
(71) Demandeur: Mafelec, 38490 Chimilin (FR)
(72) Inventeur: SORLIN, Stéphane Henri Huges, 74410 SAINT JORIOZ (FR); ESNAULT, Matthieu Olivier Stéphane, 38500 VOIRON (FR); DENSA, Patrick, 38110 LA BATIE MONTGASCON (FR)
(74) Mandataire: Cabinet Beau de Loménie

(57) **Abrégé**

L'invention concerne un dispositif lumineux de signalisation et un appareil de signalisation comportant au moins un émetteur lumineux. Le dispositif comporte, en regard de l'émetteur, un assemblage de captation (74) qui est formé d'au moins une fibre optique (75) à captation latérale. L'assemblage de captation (74) comporte une première terminaison (76), une seconde terminaison et une surface latérale. Au moins une partie d'une première lumière émise par l'émetteur est recueillie par l'assemblage de captation et au moins en partie guidée à l'intérieur de l'au moins une fibre optique à captation latérale, et ressort au travers d'au moins une terminaison (78) de l'assemblage de captation (74). Le dispositif lumineux comporte un capteur photoélectrique qui délivre un signal électrique (S) représentatif d'au moins une caractéristique de la portion reçue de la première lumière.

L'invention concerne aussi un procédé de diagnostic et/ou d'asservissement d'un tel dispositif.

## Description

L'invention concerne le domaine des dispositifs lumineux de signalisation.

On connaît de nombreux types de dispositifs lumineux pour la signalisation. On s'intéresse plus particulièrement dans le cadre de la présente invention aux dispositifs lumineux comportant un émetteur lumineux de signalisation ayant une extension selon au moins une dimension et émettant, au long de son extension, une lumière de signalisation. Ainsi, l'émetteur lumineux de signalisation n'est pas une source ponctuelle. Il peut s'agir notamment d'un émetteur lumineux unidimensionnel ayant une extension selon une dimension, qui s'étend donc selon une courbe ou une droite, ou un émetteur lumineux surfacique ayant une extension selon les deux dimensions de la surface d'émission, laquelle peut être une surface plane ou une surface courbe dans l'espace. En d'autres termes, l'émetteur lumineux de signalisation peut par exemple être un barreau lumineux unidimensionnel, ou un panneau lumineux surfacique. On parlera d'émetteur lumineux unidimensionnel lorsque la surface d'émission de lumière présente une longueur très supérieure à une largeur de la surface, par exemple dans un rapport d'au moins 10. De préférence, l'émetteur lumineux de signalisation présente au moins une dimension supérieure à 5 centimètres. Il peut de plus présenter, en projection sur un plan selon une direction perpendiculaire à ses directions d'extension, une superficie supérieure à 1 décimètre carré.

Un tel émetteur lumineux de signalisation peut éventuellement comporter une série de plusieurs sources lumineuses individuelles, lesquelles peuvent être des sources ponctuelles, agencées sur l'étendue de l'émetteur lumineux, par exemple sur une seule dimension dans le cadre d'un émetteur lumineux unidimensionnel, ou sur deux dimensions dans le cadre d'un émetteur surfacique. Il peut ainsi comporter une série de diodes électroluminescentes (DEL), par exemple disposées sur une bande selon une seule direction d'extension, ou disposées sur une surface selon deux directions d'extension.

Cependant, depuis quelque temps, il est apparu avantageux, pour certains de ces dispositifs, d'utiliser, en tant qu'émetteur lumineux de signalisation, un assemblage d'émission comportant une ou plusieurs fibres optiques de signalisation à diffusion latérale. Chaque fibre d'un tel assemblage d'émission présente une première terminaison, une seconde terminaison et une surface latérale qui s'étend entre la première terminaison et la seconde terminaison. Dans une fibre optique à diffusion latérale, lorsqu'une lumière est introduite dans la fibre par l'une des terminaisons, une partie de cette lumière est diffusée au travers de la surface latérale de la fibre. Une telle fibre se distingue donc d'une fibre optique conventionnelle qui est prévue pour que l'intégralité de la lumière introduite dans la fibre à une de ses terminaisons soit conduite par réflexion interne, avec une perte minimale, typiquement inférieure à 1 décibel/kilomètre, vers la terminaison opposée. Des fibres optiques à diffusion latérale sont connues par exemple du document FR-2.714.147. De manière générale, la surface latérale de la fibre optique est altérée, par exemple par un traitement mécanique, thermique ou chimique, pour former une zone d'émission lumineuse latérale en chaque point ainsi altéré. Il est possible de contrôler le nombre, la taille, et la densité des altérations pour qu'une portion, plusieurs portions, ou l'intégralité de la surface latérale comprenne de telles zones d'émission lumineuse latérale, formant ainsi une fibre optique à diffusion latérale. Avantageusement, le long de l'assemblage d'émission, la densité des altérations augmente avec la distance par rapport à la terminaison de l'assemblage d'émission par laquelle la lumière à diffuser est introduite, ceci afin d'avoir une émission lumineuse homogène le long de la longueur de l'assemblage d'émission.

Le grand avantage de l'utilisation d'une fibre optique à diffusion latérale, ou d'un assemblage de telles fibres, est de pouvoir avoir une surface d'émission lumineuse de grande dimension, à la manière d'un tube fluorescent par exemple, en utilisant au départ une source lumineuse de petite dimension, qui peut par exemple être considéré comme ponctuelle. Une telle source lumineuse peut être une diode électroluminescente (DEL), une diode laser, une ampoule à incandescence, etc.

Le document EP-1.156.271 décrit une source lumineuse ponctuelle et un dispositif de détection de défaillance qui comporte une fibre optique recueillant, par une de ses terminaisons, une portion de la lumière émise par la source ponctuelle.

Dans un dispositif de signalisation, il est apparu intéressant d'utiliser de telles fibres optiques à diffusion latérale, la lumière de signalisation, donc la lumière utile, étant la lumière émise par la surface latérale de la fibre optique ou de l'assemblage de fibres optiques.

L'invention trouve une application particulièrement intéressante dans les dispositifs de signalisation de sécurité, destinés notamment à indiquer la possibilité, l'imminence, ou la présence d'un danger, ou à fonctionner en présence d'un tel danger. Les dispositifs de signalisation de sécurité doivent avoir une fiabilité de fonctionnement irréprochable. Ils doivent avoir un taux de défaillance le plus faible possible. De plus, il est particulièrement avantageux de pouvoir, en cas de défaillance d'un composant d'un tel dispositif, diagnostiquer la présence d'une telle défaillance.

On comprend que les fibres optiques à diffusion latérale présentent un intérêt important dans un dispositif de signalisation de sécurité car ce sont des composants qui diffusent de la lumière mais qui sont entièrement passifs. Les fibres optiques à diffusion latérale ne transmettent pas d'électricité. Le caractère passif de ces fibres contribue à leur faible taux de défaillance. Toutefois, ce caractère passif fait qu'il est plus difficile de détecter une éventuelle défaillance de la fibre optique à diffusion latérale, ou de détecter une défaillance des moyens de couplage optique interposés entre la source de lumière et la fibre optique.

De même, dans le cas d'un émetteur lumineux de signalisation comportant de multiples sources lumineuses réparties sur l'étendue de l'émetteur lumineux, il est souhaitable de pouvoir vérifier que le flux lumineux total émis par l'ensemble de ces sources lumineuses est conforme à ce qui est attendu pour l'émetteur lumineux de signalisation.

L'invention a donc pour but de proposer un dispositif et un procédé qui permettent de diagnostiquer l'état de bon fonctionnement d'un dispositif lumineux de signalisation. Dans certaines variantes, l'invention a pour but de proposer un dispositif et un procédé qui permettent d'asservir la commande d'un dispositif lumineux de signalisation.

Dans ce but, l'invention propose un dispositif lumineux de signalisation comportant au moins un émetteur lumineux de signalisation ayant une extension selon au moins une dimension et émettant au long de son extension une lumière de signalisation.

Selon un aspect de l'invention, ce dispositif est caractérisé en ce qu'il comporte au moins un assemblage de captation qui est formé d'au moins une fibre optique de captation à captation latérale et qui est agencé en regard d'au moins une partie de l'extension de l'émetteur lumineux de signalisation. L'assemblage de captation comporte une première terminaison, une seconde terminaison et une surface latérale qui s'étend entre la première terminaison et la seconde terminaison, et au moins une partie d'une première lumière émise par l'émetteur lumineux de signalisation est recueillie par l'assemblage de captation et au moins en partie guidée à l'intérieur de l'au moins une fibre optique à captation latérale, de telle sorte qu'au moins une fraction recueillie de la première lumière ressort au travers d'au moins une terminaison de l'assemblage de captation. Le dispositif lumineux comporte au moins un capteur photoélectrique qui reçoit au moins une portion de la fraction recueillie de la première lumière pour délivrer un signal électrique représentatif d'au moins une caractéristique de la portion reçue de la première lumière.

Selon d'autres caractéristiques d'un dispositif selon l'invention, optionnelles, prises seules ou en combinaison :
- Le dispositif comporte des moyens d'analyse de la portion reçue de la première lumière sur la base du signal électrique représentatif délivré par le capteur photoélectrique.
- Les moyens d'analyse comprennent des moyens de comparaison qui comparent au moins une caractéristique de ladite portion reçue de la première lumière avec une caractéristique attendue.
- Le capteur photoélectrique est connecté optiquement par un collecteur optique à une terminaison de l'assemblage de captation.
- Le dispositif lumineux comporte au moins un assemblage d'émission formé d'une ou plusieurs fibre(s) optique(s) de signalisation à diffusion latérale ; l'assemblage d'émission comporte une première terminaison, une seconde terminaison et une surface latérale qui s'étend entre la première terminaison et la seconde terminaison et au travers de laquelle est émise une lumière visible de signalisation ; et le dispositif lumineux comporte au moins une première source de lumière qui émet la première lumière et qui est connectée optiquement à la première terminaison de l'assemblage d'émission.
- Le dispositif lumineux comporte une source principale de lumière visible distincte de la première source de lumière ; la source principale est connectée optiquement à une terminaison de l'assemblage d'émission ; et la lumière de signalisation est constituée au moins en partie par une fraction utile de la lumière émise par la source principale qui est émise au travers de la surface latérale de l'assemblage d'émission.
- La première lumière est une lumière visible ; et la lumière de signalisation est constituée au moins en partie par une fraction utile de la première lumière qui est émise au travers de la surface latérale de l'assemblage d'émission. Alternativement, la première lumière est une lumière invisible.
- Le dispositif comporte au moins une seconde source de lumière qui émet une seconde lumière et qui est connectée optiquement à la seconde terminaison de l'assemblage d'émission.
- Le dispositif lumineux comporte un second capteur photoélectrique qui est connecté optiquement par un collecteur optique à une terminaison opposée de l'assemblage de captation et qui reçoit au moins une portion de la fraction recueillie de la première lumière pour délivrer un signal électrique représentatif d'au moins une caractéristique de la fraction recueillie de la première lumière.
- La seconde lumière est une lumière visible ; et la lumière de signalisation est constituée au moins en partie par une fraction utile de la seconde lumière qui est émise au travers de la surface latérale de l'assemblage d'émission. Alternativement, la seconde lumière est une lumière invisible.
- L'assemblage de captation comporte une unique fibre optique à captation latérale.
- L'assemblage de captation comporte plusieurs fibres optiques à captation latérale comprenant chacune une première terminaison et une seconde terminaison et une surface latérale qui s'étend entre la première terminaison et la seconde terminaison ; les premières terminaisons des fibres optiques à captation latérale sont rassemblées pour former la première terminaison de l'assemblage de captation ; et les secondes terminaisons des fibres optiques à captation latérale sont rassemblées pour former la seconde terminaison de l'assemblage de captation.

L'invention concerne par ailleurs un appareil de signalisation comportant un dispositif lumineux de signalisation ayant l'une quelconque des caractéristiques précédentes.

L'invention concerne par ailleurs un procédé de diagnostic et/ou d'asservissement d'un dispositif lumineux de signalisation comportant au moins un émetteur lumineux de signalisation ayant une extension selon au moins une dimension et émettant au long de son extension une lumière de signalisation, caractérisé en ce que le procédé comprend :
- la captation, par l'intermédiaire d'au moins un assemblage de captation, d'au moins une portion reçue d'une première lumière émise par l'émetteur de signalisation, l'assemblage de captation ayant au moins une fibre optique à captation latérale et étant agencé en regard d'au moins une partie de l'extension de l'émetteur de signalisation ;
- et l'analyse de la portion reçue de la première lumière.

Selon d'autres caractéristiques d'un procédé selon l'invention, optionnelles, prises seules ou en combinaison :
- L'analyse comprend une comparaison d'au moins une caractéristique de ladite portion reçue de la première lumière avec une caractéristique attendue.
- L'analyse comprend une analyse de l'intensité de ladite portion reçue de la première lumière.
- L'analyse comprend une analyse d'une caractéristique spectrale de ladite portion reçue de la première lumière.
- Le procédé comprend l'émission d'un signal d'état du dispositif lumineux en fonction de l'analyse de ladite portion reçue de la première lumière.
- Le procédé comprend l'asservissement d'une source lumineuse du dispositif en fonction de l'analyse de ladite portion reçue de la première lumière.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue en perspective éclatée d'un appareil de signalisation, plus particulièrement un fanal, par exemple pour du matériel ferroviaire, comportant un dispositif lumineux de signalisation selon l'invention.
La **Figure 2** est une vue en perspective du fanal de la **Fig. 1****,** assemblé.
La **Figure 3** est une vue schématique d'un premier exemple de réalisation d'un dispositif lumineux de signalisation selon l'invention.
Les **Figures 4, 5****,** **6, 7****,** **8****,** **9** et **10** illustrent de manière schématique des variantes de réalisation d'un dispositif lumineux de signalisation selon invention.

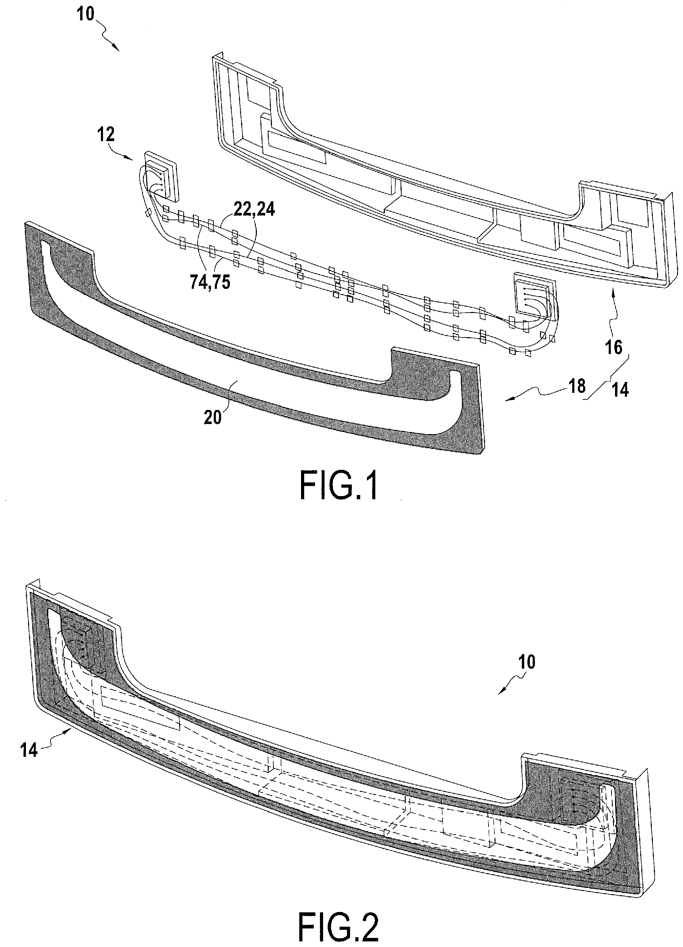

L'invention sera ici décrite dans son application à un appareil de signalisation **10,** plus particulièrement un fanal pour du matériel ferroviaire, tels que représenté sur les **Figs. 1** et **2****.** Le fanal **10** est par exemple destiné à être agencé à l'arrière ou l'avant d'un train pour assurer sa signalisation. On comprend donc qu'un tel fanal est un appareil de signalisation de sécurité qui doit présenter un faible taux de panne et dont l'état de bon fonctionnement doit pouvoir être diagnostiqué de manière fiable.

L'appareil de signalisation **10** comporte donc un dispositif lumineux de signalisation **12** qui est ici agencé à l'intérieur d'un boîtier **14.** Comme on le voit plus particulièrement sur la **Fig. 1****,** le boîtier **14** comporte par exemple une embase **16** et un capot **18.** L'embase **16** permet par exemple la fixation de l'appareil de signalisation **10,** en l'occurrence par exemple sur une voiture ou une locomotive d'un train. Elle peut par exemple être réalisée en matière plastique ou en tôle. Elle peut comprendre des moyens de fixation de l'appareil, par exemple au moyen de vis, et des passages de raccordement. L'embase **16** forme un logement ouvert sur une face. Le capot **18,** prévu pour venir se fixer sur l'embase **16,** est destiné à refermer le logement. Le capot **18** comporte un panneau de visualisation **20** qui est de préférence transparent ou translucide. Un tel panneau de visualisation est par exemple réalisé sous la forme d'un panneau de verre ou d'un panneau de matériau polymère transparent, par exemple de poly(méthacrylate de méthyle) (PMMA). Le logement délimité par le boîtier **14,** entre l'embase **16** et le capot **18,** est destiné à accueillir un dispositif lumineux de signalisation **12** selon l'invention.

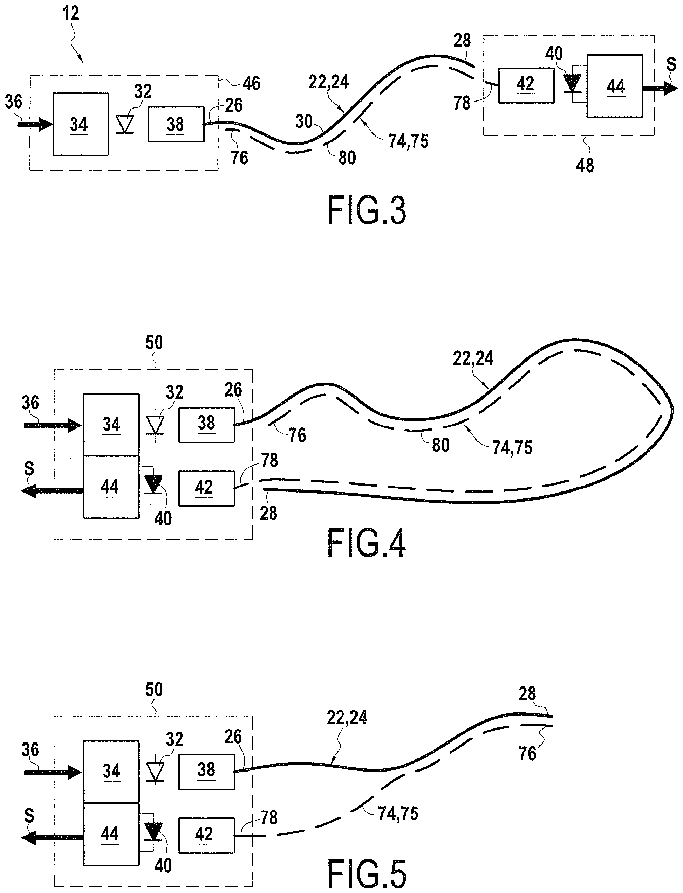

Un premier exemple de réalisation d'un dispositif lumineux de signalisation **12** est illustré de manière schématique à la **Fig. 3****.**

Le dispositif lumineux de signalisation **12** comporte un émetteur lumineux de signalisation ayant une extension selon au moins une dimension et émettant au long de son extension une lumière de signalisation.

Un tel émetteur lumineux comporte une surface d'émission lumineuse qui ne peut pas être considérée comme ponctuelle. Dans certains modes de réalisation, un tel émetteur lumineux de signalisation peut éventuellement comporter une série de plusieurs sources lumineuses individuelles, lesquelles peuvent être des sources ponctuelles, agencées sur l'étendue de l'émetteur lumineux, par exemple sur une dimension d'extension dans le cadre d'un émetteur lumineux unidimensionnel, ou sur deux dimensions d'extension dans le cadre d'un émetteur lumineux surfacique. Dans ce cas, la surface d'émission lumineuse peut être la somme des surfaces, éventuellement ponctuelles, des sources lumineuses. Cependant, l'émetteur lumineux de signalisation peut aussi comprendre un diffuseur présentant une surface d'émission tournée vers l'extérieur, la surface intérieure faisant face aux sources lumineuses individuelles.

Toutefois, dans l'exemple illustré, l'émetteur lumineux de signalisation comprend au moins un assemblage d'émission **22** d'une ou plusieurs fibre(s) optique(s) **24** de signalisation à diffusion latérale, ci-après dénommé assemblage d'émission **22.**

Par ailleurs, le dispositif lumineux **12** selon l'invention comporte aussi au moins un assemblage de captation **74** ayant au moins une fibre optique **75** de captation à captation latérale. L'assemblage de captation **74** est agencé en regard d'au moins une partie de l'extension de l'émetteur lumineux de signalisation.

Dans le présent texte, on distingue les fibres optiques **75** de captation à captation latérale, par rapport aux fibres optiques **24** de signalisation à diffusion latérale, en fonction de la fonction principale qu'elles remplissent dans le dispositif lumineux. Cependant, structurellement, ces deux types de fibres optiques sont identiques ou similaires.

De manière connue, une fibre optique de signalisation **24,** ou de captation **75** comporte une première terminaison **26, 76,** une seconde terminaison **28, 78,** et une surface latérale **30** qui s'étend entre la première terminaison **26, 76,** et la seconde terminaison **28, 78.** Comme la fibre optique de signalisation **24** est une fibre optique à diffusion latérale, une lumière visible de signalisation est émise au travers de la surface latérale **30.** Comme la fibre optique de captation **75** est une fibre optique à captation latérale, une lumière illuminant la surface latérale **80** de la fibre peut être introduite dans la fibre optique **75** au travers de la surface latérale **80,** pour se retrouver à circuler à l'intérieur de la fibre optique **75,** par guidage optique, vers chacune de ses extrémités.

Aux **Figs. 3** à **10****,** schématiques, on a illustré un assemblage d'émission **22** comportant une unique fibre optique **24** de signalisation à diffusion latérale et un assemblage de captation **74** comportant une unique fibre optique **75** de captation à captation latérale.

Toutefois, un assemblage d'émission **22** et/ou un assemblage de captation peuvent comporter plusieurs fibres optiques **24** de signalisation à diffusion latérale, respectivement fibres optiques **75** de captation à captation latérale comprenant chacune une première terminaison et une seconde terminaison et une surface latérale qui s'étend entre la première terminaison et la seconde terminaison.

Un exemple d'un assemblage **22, 74** au sens de l'invention est par exemple décrit dans le document WO-2016/198772 qui montre la réalisation d'un assemblage de fibres optiques qui sont rassemblées en un faisceau dans une enveloppe translucide. L'enveloppe translucide est par exemple sous la forme d'un fourreau tubulaire qui rassemble les fibres optiques disposées sensiblement parallèlement les unes aux autres. Dans cet exemple de réalisation, les fibres optiques à diffusion latérale sont serrées les unes contre les autres sur toute leur longueur entre leur première et leur seconde terminaison. Les premières terminaisons des fibres optiques sont rassemblées pour former la première terminaison de l'assemblage, et les secondes terminaisons des fibres optiques sont rassemblées pour former la seconde terminaison de l'assemblage.

Du point de vue de l'invention, on considérera dans le présent texte un assemblage **22, 74** de plusieurs fibres optiques comme étant équivalent à une fibre optique unique, donc équivalent à un assemblage d'une unique fibre optique. Ainsi, un assemblage **22, 74** de plusieurs fibres optiques **24** comporte une première terminaison **26, 76,** une seconde terminaison **28, 78** et une surface latérale **30, 80** qui s'étend entre la première terminaison **26, 76** et la seconde terminaison **28, 78,** et au travers de laquelle est émise une lumière visible de signalisation ou au travers de laquelle une lumière est recueillie. Dans l'exemple d'un assemblage de fibres optiques du document WO-2016/198772, la surface latérale de l'assemblage est constituée par la surface latérale du fourreau tubulaire.

Dans l'exemple d'un assemblage de fibres optiques du document WO-2016/198772, les fibres optiques sont rassemblées à l'intérieur d'un fourreau de section sensiblement cylindrique. Cependant, on connaît d'autres assemblages dans lesquels les fibres optiques sont rassemblées sous la forme d'une nappe dans laquelle les fibres optiques sont disposées côte à côte les unes parallèlement aux autres. Dans ce cas, les différentes fibres optiques peuvent être liées les unes aux autres par des fils de liaison perpendiculairement à la direction d'extension des fibres optiques, à la manière d'un tissu.

On pourrait également envisager de réaliser un assemblage de fibres optiques à diffusion latérale ou à captation latérale dans lequel les fibres ne seraient serrées les unes contre les autres que sur une partie de leur longueur. Par exemple on peut réaliser un assemblage de fibres optiques à diffusion latérale ou à captation latérale dans lequel les fibres ne sont accolées les unes aux autres qu'aux terminaisons de l'assemblage, c'est-à-dire uniquement au niveau d'une part de leur premières terminaisons respectives et d'autre part au niveau de leur secondes terminaisons respectives.

De manière générale, la surface latérale de l'assemblage d'émission ou de captation est constituée par l'ensemble des surfaces latérales des fibres optiques à diffusion latérale ou à captation latérale de l'assemblage.

Dans l'exemple de réalisation illustré sur les **Figs. 1** et **2****,** le dispositif lumineux de signalisation **12** comporte par exemple deux assemblages d'émission **22** de fibres optiques **24** à diffusion latérale, chacun des assemblages d'émission **22** pouvant comporter une unique fibre optique à diffusion latérale ou plusieurs fibres optiques à diffusion latérale, et deux assemblages de captation **74** de fibres optiques **25** à captation latérale, chacun des assemblages de captation **74** pouvant comporter une unique fibre optique à captation latérale ou plusieurs fibres optiques à captation latérale.

Une fibre optique **24** de signalisation à diffusion latérale ou une fibre optique **75** à captation latérale peut être réalisée à l'aide de différents matériaux, par exemple du verre de silice ou des matériaux polymères tels que le poly(méthacrylate de méthyle) (PMMA). Une telle fibre a subi un traitement de sa surface latérale **30** de telle sorte qu'une partie d'une lumière introduite dans la fibre optique par une de ses terminaisons est diffusée par la surface latérale **30.**

Dans l'invention, on utilise une propriété jusque-là inexploitée de ces fibres qui est qu'une lumière illuminant la surface latérale de la fibre peut être introduite dans la fibre optique au travers de la surface latérale, pour se retrouver à circuler à l'intérieur de la fibre optique **75,** par guidage optique, vers chacune de ses extrémités.

Une fibre optique à diffusion/captation latérale est par exemple réalisée selon l'enseignement du document FR-2.714.147 ou par tout autre procédé connu de l'homme du métier. De manière connue, la fibre optique à diffusion/captation latérale **24, 75,** et/ou l'assemblage **22, 74,** peut être réalisée de telle sorte qu'une unique portion, plusieurs portions, ou l'intégralité de la surface latérale comprenne(nt) des zones d'émission lumineuse latérale/ de captation latérale.

Une fibre optique à diffusion/captation latérale comporte un corps transparent, aux longueurs d'ondes utiles (ici les longueurs d'ondes visibles et celles comprises entre 780 et 3000 nanomètres, ou au moins une partie des longueurs d'ondes émises par la source ou les sources de lumière couplées à, ou guidées par, la fibre considérée). Le corps transparent peut être en deux parties coaxiales : un coeur entouré d'une gaine. Dans ce cas, la gaine et le coeur sont constitués de deux matériaux transparents aux longueurs d'ondes utiles, mais avec un indice de réfraction différent. Dans une fibre optique à diffusion/captation latérale, la surface latérale du corps transparent de la fibre optique est altérée, par exemple par un traitement mécanique, thermique ou chimique, pour former une zone d'émission/captation lumineuse latérale en chaque point ainsi altéré. L'altération de la surface latérale entraîne une perte de guidage d'une partie de la lumière qui circule à l'intérieur de la fibre optique considérée. L'altération de la surface latérale du corps transparent de la fibre optique se traduit par la présence d'irrégularités de surface de la surface latérale, par rapport à une surface latérale initiale du corps transparent, avant altération, ou surface théorique parfaite, laquelle est généralement parfaitement cylindrique. En ces irrégularités, la surface latérale du corps transparent présente, localement, une orientation différente de celle de la surface initiale au point considérée. Ces irrégularités présentent au moins une dimension qui est de l'ordre de la ou des longueurs d'ondes de la lumière à diffuser/capter au travers de la surface latérale. Dans l'exemple, ces irrégularités de surface de la surface latérale comportent de préférence au moins une dimension qui est comprise entre 100 nanomètres et 5000 nanomètres. Ces irrégularités forment ou se comportent comme des micro-facettes, ou pseudo-facettes, au niveau desquelles une lumière couplée à l'intérieur de la fibre est susceptible de s'échapper de la fibre par la surface latérale du corps transparent. Ainsi, cette partie de la lumière n'étant plus guidée est émise vers l'extérieure au travers des points altérés de la surface latérale. Inversement, une lumière qui illumine la surface latérale de la fibre depuis l'extérieur est susceptible d'être en partie recueillie et guidée à l'intérieur de la fibre par l'altération de la surface latérale. Il est généralement considéré que ces irrégularités perturbent le guidage qui, autrement, s'effectue par réflexion totale interne. Chaque irrégularité se comporte comme un centre de diffusion de la lumière ou comme un point d'injection de lumière dans la fibre, en vertu de ses dimensions proches des longueurs d'onde utilisées, et donc comme un centre d'émission ou de captation lumineuse via les phénomènes de diffusion de Mie et Rayleigh.

Généralement, dans une fibre optique à diffusion latérale, plus de 50%, préférentiellement plus de 80 % du flux lumineux d'une lumière visible introduite dans la fibre à une première terminaison est émis à travers la surface latérale. Il en découle que seule une fraction résiduelle de la première lumière visible ainsi introduite dans la fibre par une première terminaison atteint la seconde terminaison, et peut donc ressortir au travers de la seconde terminaison. Cette fraction résiduelle représente donc généralement moins de 50%, préférentiellement moins de 20 % du flux lumineux d'une lumière visible introduite dans la fibre à la première terminaison.

Le phénomène inverse, de captation latérale, est généralement beaucoup plus réduit, avec un faible rendement entre un flux lumineux illuminant la surface latérale et le flux lumineux effectivement recueilli et guidé à l'intérieur de la fibre de manière à circuler à l'intérieur de la fibre vers ses extrémités, ce qui explique qu'il soit jusqu'ici méconnu de l'homme du métier et non exploité.

Le dispositif lumineux de signalisation **12** comporte au moins une première source de lumière **32** qui émet une première lumière et qui est connectée optiquement à la première terminaison **26** de l'assemblage d'émission **22.**

Une source de lumière, notamment la première source de lumière **32,** comporte par exemple une diode électroluminescente, une diode laser, une ampoule à incandescence etc. Cependant, une source de lumière, notamment la première source de lumière **22,** peut aussi comporter plusieurs diodes électroluminescentes, ou plusieurs diodes laser ou plusieurs ampoules à incandescence ou une combinaison de ces éléments. La première source de lumière peut être une source monochromatique, ou quasi-monochromatique, ou une source polychromatique, caractérisée par un spectre d'émission. Un spectre d'émission s'entend comme l'ensemble des longueurs d'onde contenues dans la lumière émise par cette source, donc pour lesquelles l'intensité de la lumière n'est pas nulle. Le spectre d'émission peut être un spectre continu, peut comporter plusieurs portions continues disjointes et/ou peut comporter des raies discrètes. La distribution spectrale d'intensité d'une lumière est l'ensemble des valeurs relatives d'intensités pour chaque composante de longueur d'onde d'une lumière.

Dans certains modes de réalisation, la première source de lumière **32** peut comporter plusieurs diodes électroluminescentes ayant chacune un spectre d'émission distinct, par exemple deux diodes ayant chacune un spectre d'émission distinct, ou trois diodes ayant chacune un spectre d'émission distinct, émettant par exemple respectivement une lumière rouge, une lumière verte et une lumière bleue. Dans ce cas, la distribution spectrale d'intensité de la première lumière peut être variée.

La première source de lumière **32** peut comporter ou être associée à un circuit électronique de pilotage **34** qui peut être raccordé à une alimentation électrique **36.** Le circuit électronique de pilotage **34** commande le fonctionnement de la première source de lumière **32,** en commandant notamment l'intensité lumineuse de celle-ci.

De manière générale, une source de lumière, notamment la première source de lumière **32,** peut ainsi être commandée entre au moins entre deux états :
- entre un état éteint et un unique état allumé, selon une commande en tout ou rien, ou
- entre un état éteint et au moins plusieurs états allumés correspondant chacun à différents niveaux d'intensité de la première lumière et/ou différentes distributions spectrales d'intensité de la première lumière. Dans ce cas, les différents états allumés peuvent être des états discrets, avec une variation discrète d'une ou plusieurs caractéristiques entre deux états distincts. Les différents états allumés peuvent au contraire résulter d'une variation continue ou quasi-continue d'une ou plusieurs caractéristiques entre les états.

La commande d'une source de lumière peut comprendre une modulation temporelle (par exemple créneaux, rampes et/ou séquencements, etc...) d'une ou plusieurs des caractéristiques de la lumière émise.

La première source de lumière **32** est connectée optiquement à la première terminaison **26** de l'assemblage d'émission **22** de telle sorte que, lorsqu'elle émet la première lumière, celle-ci parcoure l'assemblage d'émission **22** en direction de la seconde terminaison **28** de l'assemblage d'émission **22.**

Cette connexion optique se fait par exemple avec un coupleur optique **38.** Un coupleur optique **38** peut comporter notamment une ou plusieurs lentilles optiques et/ou réflecteurs permettant de diriger et concentrer la première lumière émise par la première source de lumière **32** dans la fibre optique **24** ou l'assemblage d'émission **22** de fibres optiques **24,** au travers de la première terminaison **26.** De préférence, un coupleur optique permet d'assurer un couplage avec un rendement d'au moins 65 % entre un flux lumineux de lumière visible émis par la source de lumière considérée et le flux lumineux de lumière visible effectivement recueilli et guidé à l'intérieur de la fibre.

Comme l'assemblage d'émission **22** est constitué d'une ou plusieurs fibres optiques **24** à diffusion latérale, seule une fraction résiduelle de la première lumière atteint la seconde terminaison **28,** et peut donc ressortir au travers de la seconde terminaison **28.** En revanche, une portion utile de la première lumière est émise au travers de la surface latérale **30,** dont une partie au moins illumine l'assemblage de captation **74** agencé en regard de l'assemblage d'émission **22.**

Dans l'exemple illustré, l'assemblage de captation **74** est agencé en parallèle de l'assemblage d'émission **22,** sur au moins une partie de la longueur d'extension de l'assemblage d'émission **22,** tout au moins sur une partie de la longueur d'extension de l'assemblage d'émission **22** qui présente des altérations de sa surface latérale. Dans l'exemple illustré, l'assemblage de captation **74** et l'assemblage d'émission **22** présentent la même longueur. L'assemblage de captation **74** et l'assemblage d'émission **22** sont de préférence traités pour présenter des zones d'altération pour la diffusion/captation en regard les unes des autres. Bien entendu, on prévoit qu'il n'y ait pas d'obstacle opaque à la première lumière entre des zones d'altération en regard appartenant respectivement à l'assemblage de captation **74** et à l'assemblage d'émission **22.**

Dans l'exemple illustré, l'assemblage de captation **74** et l'assemblage d'émission **22** sont agencés à une distance l'un de l'autre, selon une direction perpendiculaire à leur extension, par exemple comprise entre 0,5 et 50 cm, de préférence comprise entre 1 et 20 cm. Cependant, l'assemblage de captation **74** et l'assemblage d'émission **22** pourraient être accolés l'un à l'autre, sur seulement une partie de leur extension ou sur toute leur extension.

Dans certains modes de réalisation, l'assemblage de captation **74** et l'assemblage d'émission **22** peuvent être confondus au sein d'un même assemblage de fibres optiques, une ou plusieurs des fibres optiques étant utilisées comme fibres optique à diffusion latérale, et une ou plusieurs des fibres optiques étant utilisées comme fibres optique à captation latérale.

De part cet agencement en regard, au moins une partie de la première lumière émise par l'assemblage d'émission **22,** donc par l'émetteur lumineux de signalisation, est recueillie par l'assemblage de captation **74** et au moins en partie guidée à l'intérieur de l'au moins une fibre optique **75** à captation latérale, de telle sorte qu'au moins une fraction recueillie de la première lumière ressort au travers d'au moins une terminaison **76, 78** de l'assemblage de captation **74.**

Dans les exemples de réalisation illustrés, la première terminaison **76** et la seconde terminaison **78** de l'assemblage de captation **74** sont agencées à proximité, respectivement, de la première terminaison **26** et de la seconde terminaison **28** de l'assemblage d'émission **22,** mais cela n'est pas obligatoire.

Selon l'invention, le dispositif **12** comporte au moins un capteur photoélectrique **40** qui reçoit au moins une portion de la fraction recueillie de la première lumière, dite portion reçue de la première lumière, pour délivrer un signal électrique représentatif d'au moins une caractéristique de la portion reçue de la première lumière, donc représentatif d'au moins une caractéristique de la fraction recueillie de la première lumière qui a été recueillie par l'assemblage de captation **74.** La portion reçue de la première lumière est la partie de la première lumière qui est reçue par le capteur photoélectrique **40** par l'intermédiaire de l'assemblage de captation **74.**

Le capteur photoélectrique **40** est connecté optiquement à l'une des terminaisons de l'assemblage de captation **74.** Dans les exemples de réalisation illustrés, le capteur photoélectrique **40** est connecté optiquement à la seconde terminaison **78** de l'assemblage de captation **74,** mais on pourrait envisager de le connecter optiquement à la première terminaison **76.**

Ce capteur photoélectrique **40** peut être un capteur monochromatique, sensible à une seule longueur d'onde, ou multichromatique, sensible à différentes longueurs d'onde. Le capteur photoélectrique **40** peut être un capteur de type photodiode, phototransistor, CCD, CMOS, bolomètre, ..., etc.

Bien entendu, on choisira le capteur photoélectrique **40** de telle sorte que le capteur soit sensible à au moins une partie du spectre d'émission de la première source lumineuse **32.**

Le capteur photoélectrique **40** peut être connecté optiquement à la terminaison **78** de l'assemblage de captation **74** par un collecteur optique **42.** Le collecteur optique **42** peut comporter notamment une ou plusieurs lentilles optiques permettant de diriger et concentrer, sur le capteur photoélectrique **40,** au moins une portion de la fraction recueillie de la première lumière qui émerge de la terminaison **78** de la fibre optique **75** ou de l'assemblage **74** de fibres optiques **75.**

Le capteur photoélectrique **40** comporte ou est associé à un circuit électronique **44** qui met en forme et délivre le signal électrique **S** représentatif de la portion reçue de la première lumière.

Comme on le verra plus en détail plus loin, le signal électrique **S** délivré par le capteur photoélectrique **40** peut permettre notamment de réaliser un diagnostic de l'état de bon fonctionnement du dispositif lumineux **12** de signalisation. En effet, en présence d'un signal lumineux au niveau de la terminaison **78,** détecté par le capteur photoélectrique **40,** on peut notamment déduire que l'assemblage d'émission **22** émet au moins une partie de la première lumière au travers de sa surface latérale **30.** De plus, il sera vu que le signal électrique **S** délivré par le capteur photoélectrique **40** peut être utilisé pour l'asservissement de la commande d'une source de lumière, notamment de la première source de lumière **32.**

Comme on le verra plus en détail plus loin, le dispositif lumineux **12** peut comprendre ou être associé à des moyens d'analyse **64** du signal électrique **S** délivré par le capteur photoélectrique **40.** Ces moyens d'analyse **64** peuvent comprendre des moyens de comparaison **66, 68** qui comparent au moins une caractéristique de ladite portion reçue de la première lumière, donc une caractéristique de la fraction recueillie de la première lumière, avec une caractéristique attendue. La caractéristique analysée peut être par exemple une caractéristique d'intensité, ou une caractéristique spectrale, par exemple une distribution spectrale d'intensité de la lumière reçue par le capteur. Les moyens d'analyse sont réalisés de préférence sous la forme d'un circuit électronique. Un tel circuit électronique peut comporter un comparateur.

Dans le mode de réalisation illustré à la **Fig. 3****,** la première source de lumière **32** et le capteur photoélectrique **40** sont éloignés l'un de l'autre. Plus particulièrement, comme dans l'exemple illustré sur les **Figs. 2** et **3****,** on peut prévoir que la première source de lumière **32** soit agencée à une première extrémité de l'appareil de signalisation **10** et que le capteur photoélectrique **40** soit agencé à une seconde extrémité de l'appareil de signalisation, le ou les assemblages d'émission **22** et de captation **74** s'étendant entre ces deux extrémités. On comprend dans ce cas que le dispositif lumineux de signalisation **12** peut alors comporter une première carte électronique **46** portant la première source de lumière **32,** et éventuellement d'autres composants comme le coupleur optique **38** et/ou le circuit électronique de pilotage **34** de la première source de lumière, et une seconde carte électronique **48,** distincte de la première carte électronique **46,** portant le capteur photoélectrique **40** et éventuellement d'autres composants comme le collecteur optique **42** et/ou un éventuel circuit électronique **44** associé au capteur photoélectrique **40.**

Cependant, dans certains cas, il peut être préférable de regrouper certains au moins des composants du dispositif lumineux **12,** notamment des composants électroniques/optroniques. Ainsi dans l'exemple illustré à la **Fig. 4****,** on a illustré le cas où la première source de lumière **32** et le capteur photoélectrique **40** sont agencés à proximité l'un de l'autre, par exemple sur une carte électronique commune **50.** Dans ce cas, le ou les assemblages d'émission **22** de fibre(s) optique(s) à diffusion latérale et le ou les assemblages **74** de fibre(s) optique(s) à captation latérale s'étendent selon une boucle, avec la première terminaison **26, 76** de chaque assemblage à proximité de la seconde terminaison **28, 78** de l'assemblage considéré. Dans le cadre d'un appareil de signalisation **10,** cela permet de regrouper tous les composants actifs, notamment tous les composants électroniques/optroniques, de l'appareil dans une même zone de l'appareil. Ce regroupement permet par exemple de disposer ces composants actifs, notamment les composants électroniques/optroniques tels que la première source de lumière **22** et le capteur photoélectrique **40** et leurs circuits électroniques associés **34, 44,** dans un compartiment qui peut par exemple être plus facilement rendu résistant aux agressions extérieures, notamment résistant aux infiltrations d'eau. De plus, en permettant par exemple de regrouper les composants actifs, notamment les composants électroniques/optroniques tels que la première source de lumière **22** et le capteur photoélectrique **40** sur une carte électronique commune **50,** il est possible d'en réduire les coûts de fabrication. Enfin, un tel regroupement permet de simplifier la connexion de ces composants actifs à une alimentation électrique et/ou à d'autres circuits électriques ou électroniques de l'appareil de signalisation ou d'une installation plus générale à laquelle cet appareil est intégré.

Dans l'ensemble des modes de réalisation, on peut prévoir que le ou les assemblages **22** de fibre(s) optique(s) **24** à diffusion latérale, et éventuellement que le ou les assemblages **74** de fibre(s) optique(s) **75** à captation latérale soient traités de manière à ce qu'une portion seulement de leur longueur soit diffusante/ apte à la captation. Par exemple, une première portion, par exemple une première moitié de la longueur, peut être traitée de manière à permettre une diffusion/captation latérale, tandis qu'une seconde portion, par exemple une seconde moitié de la longueur, peut ne pas être traitée, donc ne pas permettre la diffusion/captation de lumière au travers de la surface latérale.

On a illustré sur la **Fig. 5** un mode de réalisation qui reprend le même agencement avec des composants actifs regroupés, par exemple sur une carte électronique commune **50,** comme dans l'exemple de la **Fig. 4****.** Toutefois, dans ce mode de réalisation, on voit que la seconde extrémité **28** de l'assemblage d'émission **22** et la première extrémité **76** de l'assemblage de captation **74** sont libres. En effet, dans l'ensemble des modes de réalisation illustrés, la seconde extrémité **28** de l'assemblage d'émission **22** et la première extrémité **76** de l'assemblage de captation **74** ne sont raccordés à aucun composant actif, notamment ne sont raccordés optiquement à aucun composant électronique/optronique. Il n'empêche que la seconde extrémité **28** de l'assemblage d'émission **22** et la première extrémité **76** de l'assemblage de captation **74** peuvent être reliées, au moins mécaniquement, à l'une ou l'autre des cartes électroniques **46, 48, 50.**

Bien entendu, il serait possible d'utiliser une fibre optique auxiliaire pour relier optiquement le capteur photoélectrique **40** à la seconde terminaison **78** de l'au moins un assemblage de captation **74.**

Dans les exemples de réalisation illustrés aux **Figs. 3, 4** et **5****,** la première lumière est une lumière visible, et la lumière de signalisation est constituée par une fraction utile de la première lumière qui est émise au travers de la surface latérale **30** de l'assemblage d'émission **22,** et qui est donc au moins en partie recueillie par l'assemblage de captation **74.** On considère qu'une lumière est visible si son spectre d'émission est compris au moins en partie dans la plage des longueurs d'onde allant de 380 à 780 nanomètres.

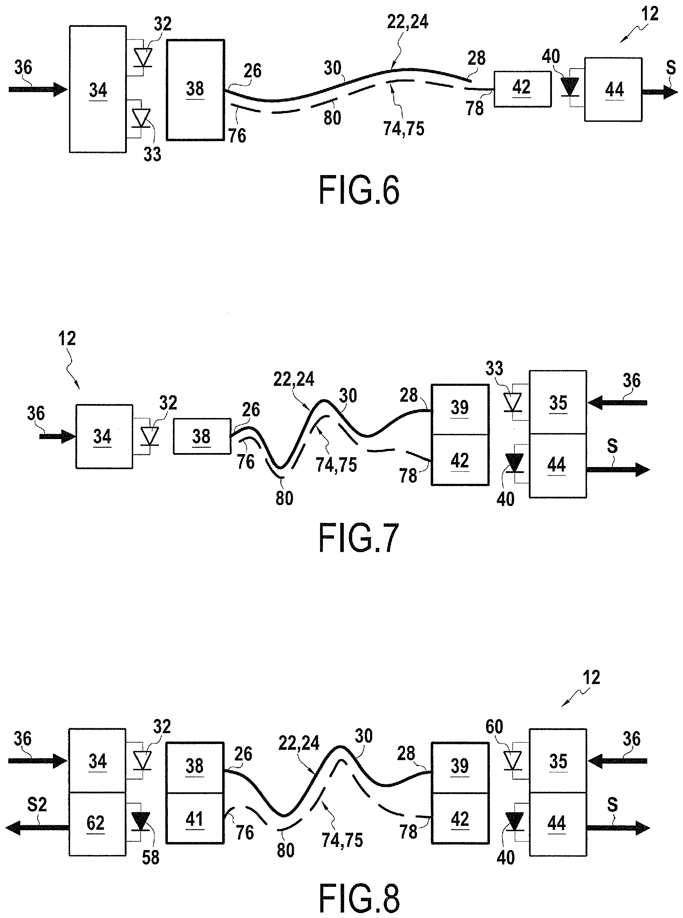

Cependant, on peut prévoir, comme illustré aux **Fig. 6** et **7****,** que le dispositif **12** comporte une source principale **33** de lumière visible distincte de la première source de lumière **32.** Dans ce cas, on peut prévoir que la source principale **33** est connectée optiquement à une terminaison de l'assemblage d'émission **22,** soit la première terminaison **26** comme dans l'exemple de réalisation de la **Fig. 6****,** soit la seconde terminaison **28** comme dans l'exemple de réalisation de la **Fig. 7****.** Dans un tel dispositif lumineux **12,** la lumière de signalisation est constituée au moins en partie par une fraction utile de la lumière émise par la source principale **33** qui est émise au travers de la surface latérale **30** de l'assemblage d'émission **22, 24.** Dans un tel dispositif lumineux **12,** la première lumière peut être une lumière invisible, et la première lumière peut être alors utilisée uniquement à des fins de diagnostic et/ou d'asservissement tel que cela sera décrit plus bas. Une lumière sera considérée invisible si son spectre d'émission ne comprend pas de longueurs d'onde dans la plage allant de 380 à 780 nanomètres. Dans la mesure où la lumière de signalisation provient de la source principale **33** de lumière visible, on pourra par exemple choisir une première lumière invisible, notamment dans le domaine infrarouge, avec par exemple un spectre d'émission compris dans une plage allant de 780 à 3000 nanomètres.

Dans le dispositif de la **Fig. 6****,** la première source de lumière **32** et la source principale de lumière visible **33** peuvent être pilotées par le même circuit électronique de pilotage **34.** Cependant, des circuits de pilotage séparés peuvent être prévus. La première source de lumière **32** et la source de lumière principale **33** peuvent être connectées optiquement à la première terminaison **26** de l'assemblage d'émission **22** par un coupleur optique **38** en Y.

Dans le dispositif de la **Fig. 7****,** la source principale **33** de lumière visible peut comporter son propre circuit électronique de pilotage **35.** La source principale **33** de lumière visible peut être connectée optiquement à la seconde terminaison **28** de l'assemblage d'émission **22** par un coupleur optique **39.**

Les modes de réalisation des **Figs. 6** et **7** incorporant une source principale **33** de lumière visible distincte de la première source de lumière **32** sont basés sur le mode de réalisation de la **Fig. 3****.** Cependant, une telle source principale **33** de lumière visible distincte de la première source de lumière **32** peut aussi être ajoutée dans le cadre des autres modes de réalisation décrits ci-dessus ou ci-dessous.

Il peut être avantageux de prévoir que la lumière de signalisation provienne d'une source principale **33** de lumière visible distincte de la première source de lumière **32.** En effet, la première source de lumière **32** peut être alors utilisée par exemple pour établir un diagnostic de l'état de bon fonctionnement du dispositif lumineux **12** de signalisation même lorsque la source principale **33** de lumière visible est éteinte. Avantageusement, on prévoit que la première lumière émise par la première source de lumière **32** est invisible de telle sorte que le diagnostic de l'état de bon fonctionnement peut être réalisé de manière invisible, y compris lorsque le dispositif lumineux **12** n'émet pas de lumière de signalisation. On note que l'on peut prévoir que le capteur photoélectrique **40** soit sensible à la fois à la lumière visible émise par la source principale **33** et à la première lumière émise par la première source de lumière **32,** même si cette dernière émet dans un domaine invisible ou distinct du domaine d'émission de la source principale **33** de lumière visible. Dans ce cas, le signal électrique délivré **S** par le capteur photoélectrique **40** peut être utilisé dans un procédé de diagnostic de l'état de bon fonctionnement du dispositif à la fois lors de l'activation de la première source de lumière **32** et lors de l'activation de la source principale **33** de lumière visible. Il est ainsi possible de procéder au diagnostic à la fois lorsque le dispositif lumineux émet une lumière de signalisation et lorsqu'il n'émet pas une lumière de signalisation. De plus, dans cette configuration, le signal électrique **S** délivré par le capteur photoélectrique **40** peut aussi être utilisé pour réaliser un asservissement de la source principale **33** de lumière visible, comme cela sera développé plus bas.

Dans certains cas, notamment pour augmenter l'intensité lumineuse de la lumière de signalisation émise au travers de la surface latérale **30** du ou des assemblages d'émission **22** de fibre(s) optique(s) **24** à diffusion latérale, il peut être avantageux de prévoir une source de lumière visible à chacune des deux terminaisons d'un ou plusieurs des assemblages d'émission **22.**

On note que, dans le cadre du mode de réalisation de la **Fig. 7****,** on peut prévoir que la première lumière émise par la première source lumineuse **32** soit une lumière visible.

On peut prévoir un dispositif lumineux **12** de signalisation tel qu'illustré à la **Fig. 8****,** qui est identique au mode de réalisation de la **Fig. 7** sauf par l'adjonction d'un second capteur photoélectrique **58** connecté optiquement à la première terminaison **76** de l'assemblage de captation **74.**

Dans les deux cas illustrés aux **Figs. 7** et **8****,** le dispositif lumineux **12** comporte ainsi au moins une seconde source de lumière **33, 60** qui émet une seconde lumière et qui est connectée optiquement à la seconde terminaison **28** de l'assemblage d'émission **22,** la seconde lumière parcourant l'assemblage d'émission **22.** Pour le mode de réalisation de la **Fig. 7****,** on considère alors que la source principale **33** de lumière visible forme la seconde source de lumière.

Dans les deux cas illustrés aux **Figs. 7** et **8****,** l'assemblage d'émission **22** émet, par sa surface latérale **30,** une fraction utile de la première lumière et/ou de la seconde lumière, en fonction de l'état de fonctionnement de la première source de lumière et de la seconde source de lumière. Cette lumière émise par la surface latérale **30** de l'assemblage d'émission **22** est au moins en partie recueillie par l'assemblage de captation **74,** au travers de sa surface latérale **80.** De la sorte, le capteur photoélectrique **40** reçoit au moins une portion de la fraction recueillie de la première lumière et/ou au moins une portion de la fraction recueillie de la seconde lumière, en fonction de l'état de fonctionnement de la première source de lumière et de la seconde source de lumière, pour délivrer un signal électrique **(S)** représentatif d'au moins une caractéristique de la portion reçue de la première lumière et/ou d'au moins une caractéristique de la portion reçue de la seconde lumière.

Dans le cas du mode de réalisation de la **Fig. 8****,** le second capteur photoélectrique **58** reçoit lui aussi au moins une portion de la fraction recueillie de la première lumière et/ou au moins une portion de la fraction recueillie de la seconde lumière, pour délivrer un signal électrique représentatif **S2** d'au moins une caractéristique de la portion reçue de la première lumière et/ou d'au moins une caractéristique de la portion reçue de seconde lumière, donc d'au moins une caractéristique de la fraction recueillie de la première et/ou de la seconde lumière. Bien entendu, le dispositif lumineux **12** de la **Fig. 8** peut comporter ou être associé à un circuit électronique **62** qui met en forme et délivre le signal électrique **S2** représentatif de la fraction recueillie de la première et/ou de la seconde lumière. Le second capteur photoélectrique **58** peut être connecté optiquement à la première terminaison **76** de l'assemblage de captation **74** par un collecteur optique **41.**

On note que, de préférence, la seconde lumière est une lumière visible. De la sorte, la lumière de signalisation est constituée au moins en partie par une fraction utile de la seconde lumière qui est émise au travers de la surface latérale **30** de l'assemblage d'émission **22.**

De préférence, à la fois la première lumière et la seconde lumière sont des lumières visibles de sorte que, dans ce cas, le dispositif lumineux **12** comporte une source de lumière visible à chacune des deux terminaisons **26, 28** d'un ou plusieurs des assemblages d'émission **22.** La lumière de signalisation peut être alors constituée par la fraction utile de l'une ou de l'autre de la première ou de la seconde lumière si la première source et la seconde source sont allumées alternativement, ou peut être constituée par la somme des fractions utiles de l'une et de l'autre de la première et de la seconde lumière si la première source et la seconde source sont allumées simultanément. Ce dernier cas permet d'augmenter l'intensité lumineuse de la lumière de signalisation émise au travers de la surface latérale **30** du ou des assemblages d'émission **22** formés de fibre(s) optique(s) **24** à diffusion latérale.

Cependant, dans certaines variantes du mode de réalisation de la **Fig. 8****,** la seconde lumière peut être une lumière invisible, notamment si la première lumière est une lumière visible.

En variante, non représentée, on peut prévoir une variante de la **Fig. 8****,** avec la présence du premier et du second capteur photoélectrique **40, 80,** mais sans la seconde source de lumière. La présence d'un premier et d'un second capteur photoélectrique à chacune des deux terminaisons de l'assemblage de captation **74** permet de recevoir et prendre en compte la fraction de lumière recueillie par l'assemblage de captation quel que soit le sens de circulation de la lumière dans l'assemblage de captation **74.** Cela peut notamment permettre de diminuer le rapport signal/bruit électrique **S, S2** représentatif de la fraction recueillie de la première et/ou de la seconde lumière.

On note que les modes de réalisation des **Figs. 6, 7** et **8** sont illustrés dans un agencement proche de celui de la **Fig. 3****,** avec la première terminaison **26** et la seconde terminaison **28** du ou des assemblages d'émission **22** éloignées l'une de l'autre, et avec la première terminaison **76** et la seconde terminaison **78** du ou des assemblages de captation **74** éloignées l'une de l'autre. Cependant, ces mêmes modes de réalisation peuvent être déclinés sans difficulté dans des variantes qui reprennent le principe décrit en relation avec le mode de réalisation de la **Fig. 4** dans lequel le ou les assemblages **22, 24, 74, 75** forment une boucle de manière que la ou les premières terminaisons **26, 76** soient à proximité de la ou des secondes terminaisons **28, 78.** Dans un tel agencement, il est ainsi possible de disposer tous les composants actifs du dispositif lumineux **12,** notamment la première et la seconde source de lumière et les deux capteurs photoélectriques **40, 58,** à proximité les uns des autres, par exemple sur une carte électronique commune.

Les modes de réalisation d'un dispositif lumineux **12** tels que décrits ci-dessus, et leurs variantes, permettent de mettre en oeuvre un procédé de diagnostic et/ou d'asservissement de la commande d'un dispositif de signalisation très simple et fiable.

Un tel procédé comprend la captation, par l'intermédiaire d'au moins un assemblage de captation **74,** d'au moins une portion reçue de la première lumière, notamment par le capteur photoélectrique **40** et éventuellement par le second capteur photoélectrique **58,** et l'analyse de la portion reçue de la première lumière.

Selon un premier aspect, il est proposé un procédé de diagnostic de l'état de bon fonctionnement du dispositif de signalisation.

Selon un second aspect, il est proposé un procédé d'asservissement d'une source de lumière du dispositif de signalisation, notamment d'une source de lumière de signalisation, c'est-à-dire, suivant les exemples décrits plus haut, d'asservissement de la commande de la première source de lumière **32,** de la source principale **33** de lumière visible et/ou de la seconde source de lumière **60.**

Dans les deux cas, l'analyse peut comprendre une comparaison d'au moins une caractéristique de ladite portion reçue de la première lumière, donc d'une caractéristique de la fraction recueillie de la première lumière, avec une caractéristique attendue. Cette comparaison peut prendre en compte aussi la portion reçue de la seconde lumière dans les cas correspondants.

Une caractéristique de ladite portion reçue de la première lumière peut comprendre par exemple l'intensité de ladite portion reçue de la première lumière ou une caractéristique spectrale de ladite portion reçue de la première lumière.

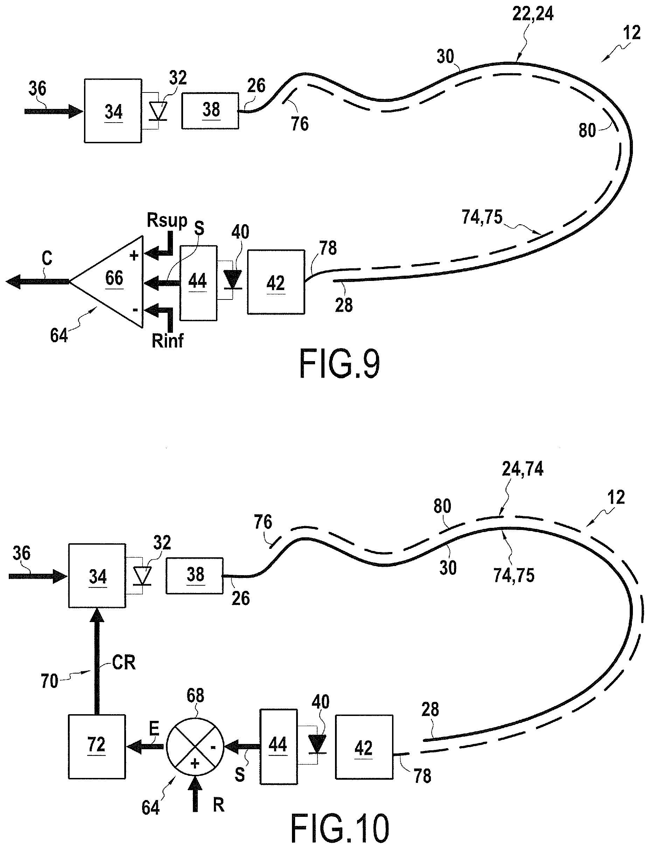

Sur la **Fig. 9****,** on a illustré, pour un mode de réalisation, un dispositif lumineux **12** comportant des moyens d'analyse **64** permettant de diagnostiquer l'état de bon fonctionnement du dispositif de signalisation.

Les moyens d'analyse **64** comportent dans ce cas par exemple des moyens de comparaison réalisés sous la forme d'un circuit électronique. On pourrait par exemple utiliser un simple circuit comparateur basé sur un amplificateur opérationnel. Un tel circuit serait utilisé pour comparer la valeur instantanée du signal **S** délivré par le capteur photoélectrique **40** à une valeur de référence. En dessous de la valeur de référence, on pourrait en déduire un disfonctionnement du dispositif. Sur la **Fig. 9****,** on a illustré plus particulièrement un comparateur à fenêtres **66** permettant de comparer la valeur instantanée du signal **S** délivré par le capteur photoélectrique **40** à deux valeurs de références **Rinf** et **Rsup.** Ces valeurs de référence **Rinf** et **Rsup** sont par exemple des signaux électriques représentatifs des bornes inférieure et supérieure d'une caractéristique attendue, par exemple représentatif des bornes inférieure et supérieure de l'intensité ou d'une caractéristique spectrale attendue de la portion reçue de la première lumière. Dans ce mode de réalisation, le comparateur à fenêtres **66** délivre une information de comparaison **C** binaire, par exemple ayant la valeur 0 ou la valeur 1, suivant si la valeur instantanée du signal **S** est comprise entre les deux valeurs de référence **Rinf** et **Rsup** ou au contraire en dehors de la plage définie par ces deux valeurs de référence. Cette information binaire **C** est donc indicative de l'état de bon fonctionnement du dispositif lumineux **12.** Bien entendu, les moyens d'analyse peuvent comprendre d'autres éléments, non représentés, en plus ou à la place de ceux évoqués ci-dessus ou ci-dessous. Par exemple, les moyens d'analyse peuvent comprendre une unité électronique à microprocesseur. Dans un tel cas, l'information binaire **C** délivrée par le comparateur à fenêtres **66** peut être une donnée d'entrée délivrée à l'unité électronique à microprocesseur, laquelle peut être programmée pour effectuer un diagnostic plus fin, notamment en tenant compte d'autres variables.

Sur la **Fig. 10****,** on a illustré, pour un mode de réalisation, un dispositif lumineux **12** comportant des moyens d'analyse **64** permettant d'effectuer un asservissement d'une source lumineuse, en l'occurrence la première source de lumière **32.** Pour cela, les moyens d'analyse **64** comportent par exemple un circuit électrique ou électronique différentiel **68** permettant de définir un signal électrique **E** représentatif de l'écart entre la valeur instantanée du signal **S** délivré par le capteur photoélectrique **40** et une valeur de référence **R.** Le circuit électrique ou électronique différentiel **68** est aussi un comparateur. Cette valeur de référence **R** est par exemple un signal électrique représentatif d'une caractéristique attendue, par exemple représentatif de l'intensité ou d'une caractéristique spectrale attendue de la portion reçue de la première lumière. Le signal électrique **E** représentatif de l'écart peut être utilisé pour asservir la commande de la première source de lumière **32,** par exemple au moyen d'une boucle de régulation **70.** Dans l'exemple illustré, la boucle de régulation **70** comporte par exemple un correcteur PI (proportionnel, intégrateur) ou un correcteur PID **72** (proportionnel, intégrateur, dérivateur) qui reçoit le signal électrique **E** représentatif de l'écart et qui délivre un signal de correction **CR** au circuit électronique de pilotage **34** qui commande la première source de lumière **32.** On peut ainsi maintenir l'intensité lumineuse délivrée par la première source de lumière à une valeur attendue ou au-dessus d'une valeur attendue, de manière ainsi à garantir une intensité lumineuse suffisante de la lumière de signalisation.

Les moyens d'analyse **64** illustrés aux **Figs. 9** et **10** sont des moyens analogiques mais on comprend que des moyens d'analyse numériques peuvent être utilisés, par exemple sous la forme d'une unité électronique à microprocesseur, notamment sous la forme d'un micro-ordinateur. Dans ce cas, le signal électrique **S** délivré par le capteur photoélectrique **40** est avantageusement un signal numérique.

Bien entendu, dans un même dispositif lumineux **12,** on peut mettre en oeuvre les deux procédés de diagnostic et d'asservissement de la commande d'une source de lumière. En effet, on peut prévoir que le même signal **S** délivré par le capteur photoélectrique **40** soit utilisé des deux manières décrites ci-dessus.

Bien entendu, en cas de présence d'un second capteur photoélectrique **68,** des seconds moyens d'analyse, ou les mêmes moyens d'analyse, peuvent être utilisés de manière similaire pour analyser la portion reçue de la seconde lumière.

On note que l'assemble de captation **74** est susceptible de recueillir aussi une lumière ambiante externe au dispositif. Cette lumière ambiante recueillie peut aussi être analysée, par exemple lors d'une phase de non-fonctionnement de l'émetteur lumineux de signalisation, afin par exemple de déterminer l'intensité de la luminosité ambiante. Cette lumière ambiante recueillie peut aussi être analysée par l'analyse d'une ou plusieurs composantes spectrales de la lumière qui ne seraient pas comprises dans la première et/ou la seconde lumière. Une telle information représentative de l'intensité de la lumière ambiante peut être utilisée pour adapter la commande de la première source de lumière **32.**

Dans les exemples illustrés, un assemblage d'émission **22** est associé à une source de lumière. On peut prévoir que plusieurs assemblages d'émission soient associés à la même source de lumière. Lorsque le dispositif comporte plusieurs assemblages d'émission **22,** on peut prévoir que des assemblages d'émission différents soient associés à des sources de lumière différentes, voire que chaque assemblage d'émission soit associé à une source de première lumière différente.

Dans les exemples illustrés, un assemblage de captation **74** est associé à un capteur photoélectrique. On peut prévoir que plusieurs assemblages de captation soient associés au même capteur photoélectrique. Lorsque le dispositif comporte plusieurs assemblages de captation **74,** on peut prévoir que des assemblages de captation différents soient associés à des capteurs photoélectriques différents, voire que chaque assemblage de captation soit associé à un capteur photoélectrique différent.

L'invention n'est pas limitée aux exemples décrits et représentés car diverses modifications peuvent y être apportées sans sortir de son cadre.

## Revendications

1. Dispositif lumineux **(12)** de signalisation comportant au moins un émetteur lumineux de signalisation ayant une extension selon au moins une dimension et émettant au long de son extension une lumière de signalisation,
**caractérisé en ce qu'**il comporte au moins un assemblage de captation **(74)** qui est formé d'au moins une fibre optique **(75)** de captation à captation latérale et qui est agencé en regard d'au moins une partie de l'extension de l'émetteur lumineux de signalisation,
**en ce que** l'assemblage de captation **(74)** comporte une première terminaison **(76),** une seconde terminaison **(78)** et une surface latérale **(80)** qui s'étend entre la première terminaison et la seconde terminaison, **en ce que** qu'au moins une partie d'une première lumière émise par l'émetteur lumineux de signalisation est recueillie par l'assemblage de captation et au moins en partie guidée à l'intérieur de l'au moins une fibre optique à captation latérale, de telle sorte qu'au moins une fraction recueillie de la première lumière ressort au travers d'au moins une terminaison **(78)** de l'assemblage de captation **(74),**
**et en ce que** le dispositif lumineux **(12)** comporte au moins un capteur photoélectrique **(40)** qui reçoit au moins une portion de la fraction recueillie de la première lumière pour délivrer un signal électrique **(S)** représentatif d'au moins une caractéristique de la portion reçue de la première lumière.

2. Dispositif selon la revendication 1, **caractérisé en ce que** le dispositif lumineux **(12)** comporte au moins un assemblage d'émission **(22)** formé d'une ou plusieurs fibre(s) optique(s) **(24)** de signalisation à diffusion latérale, **en ce que** l'assemblage d'émission **(22)** comporte une première terminaison **(26),** une seconde terminaison **(28)** et une surface latérale **(30)** qui s'étend entre la première terminaison et la seconde terminaison et au travers de laquelle est émise une lumière visible de signalisation, et **en ce que** le dispositif lumineux **(12)** comporte au moins une première source de lumière **(32)** qui émet la première lumière et qui est connectée optiquement à la première terminaison **(26)** de l'assemblage d'émission **(22).**

3. Dispositif selon la revendication **2, caractérisé en ce que** le dispositif lumineux **(12)** comporte une source principale **(33)** de lumière visible distincte de la première source de lumière **(32), en ce que** la source principale **(33)** est connectée optiquement à une terminaison **(26, 28)** de l'assemblage d'émission **(22),** et **en ce que** la lumière de signalisation est constituée au moins en partie par une fraction utile de la lumière émise par la source principale **(33)** qui est émise au travers de la surface latérale **(30)** de l'assemblage d'émission.

4. Dispositif selon l'une quelconque des revendications **1** à **3, caractérisé en ce que** la première lumière est une lumière invisible.

5. Dispositif selon l'une quelconque des revendications précédentes en combinaison avec la revendication **2, caractérisé en ce qu'**il comporte au moins une seconde source de lumière **(60)** qui émet une seconde lumière et qui est connectée optiquement à la seconde terminaison **(28)** de l'assemblage d'émission **(22).**

6. Dispositif selon l'une quelconque des revendications précédentes, **caractérisé en ce que** le capteur photoélectrique **(40)** est connecté optiquement par un collecteur optique **(42)** à une terminaison **(78)** de l'assemblage de captation **(74)** et **en ce que** le dispositif lumineux **(12)** comporte un second capteur photoélectrique **(58)** qui est connecté optiquement par un collecteur optique **(41)** à une terminaison opposée **(76)** de l'assemblage de captation **(74)** et qui reçoit au moins une portion de la fraction recueillie de la première lumière pour délivrer un signal électrique **(S2)** représentatif d'au moins une caractéristique de la fraction recueillie de la lumière.

7. Dispositif selon la revendication 5 ou la revendication 6, **caractérisé en ce que** la seconde lumière est une lumière invisible.

8. Dispositif selon l'une quelconque des revendications **1** à **7, caractérisé en ce que** l'assemblage de captation **(74)** comporte plusieurs fibres optiques à captation latérale **(75)** comprenant chacune une première terminaison **(76)** et une seconde terminaison **(78)** et une surface latérale **(80)** qui s'étend entre la première terminaison **(76)** et la seconde terminaison **(78),** **en ce que** les premières terminaisons **(76)** des fibres optiques à captation latérale **(75)** sont rassemblées pour former la première terminaison **(76)** de l'assemblage de captation **(74),** et **en ce que** les secondes terminaisons **(78)** des fibres optiques à captation latérale **(75)** sont rassemblées pour former la seconde terminaison **(78)** de l'assemblage de captation **(74).**

9. Dispositif selon l'une quelconque des revendications précédentes, **caractérisé en ce que** ladite au moins une fibre optique de captation à captation latérale comporte un corps transparent dont une surface latérale est altérée, par un traitement mécanique, thermique ou chimique, pour former une zone de captation lumineuse latérale en chaque point ainsi altéré

10. Appareil de signalisation **(10) caractérisé en ce qu'**il comporte un dispositif lumineux **(12)** de signalisation selon l'une quelconque des revendications précédentes.

11. Procédé de diagnostic et/ou d'asservissement d'un dispositif lumineux **(12)** de signalisation comportant au moins un émetteur lumineux de signalisation ayant une extension selon au moins une dimension et émettant au long de son extension une lumière de signalisation, **caractérisé en ce que** le procédé comprend :
- la captation, par l'intermédiaire d'au moins un assemblage de captation **(74),** d'au moins une portion reçue d'une première lumière émise par l'émetteur de signalisation, l'assemblage de captation **(74)** ayant au moins une fibre optique **(25)** à captation latérale et étant agencé en regard d'au moins une partie de l'extension de l'émetteur de signalisation ;
- et l'analyse de la portion reçue de la première lumière.

12. Procédé selon la revendication 11, **caractérisé en ce que** l'analyse comprend une comparaison d'au moins une caractéristique de ladite portion reçue de la première lumière avec une caractéristique attendue,
et/ou une analyse de l'intensité de ladite portion reçue de la première lumière., et/ou une analyse d'une caractéristique spectrale de ladite portion reçue de la première lumière.

13. Procédé selon l'une quelconque des revendications 11 ou 12, **caractérisé en ce qu'**il comprend l'émission d'un signal d'état du dispositif lumineux **(12)** en fonction de l'analyse de ladite portion reçue de la première lumière.

14. Procédé selon l'une quelconque des revendications 11 à 13, **caractérisé en ce qu'**il comprend l'asservissement d'une source lumineuse du dispositif en fonction de l'analyse de ladite portion reçue de la première lumière.

15. Procédé selon l'une quelconque des revendications 11 à 14, **caractérisé en ce que** ladite au moins une fibre optique de captation à captation latérale comporte un corps transparent dont une surface latérale est altérée, par un traitement mécanique, thermique ou chimique, pour former une zone de captation lumineuse latérale en chaque point ainsi altéré.
